Europäisches Patentamt

European Patent Office

Office européen des brevets

(11) Veröffentlichungsnummer: **0 192 801**
**A1**

(12) # EUROPÄISCHE PATENTANMELDUNG

(21) Anmeldenummer: 85103453.8

(22) Anmeldetag: 23.03.85

(51) Int. Cl.⁴: **H 02 H 9/06**

(30) Priorität: 27.02.85 CH 892/85

(43) Veröffentlichungstag der Anmeldung:
03.09.86 Patentblatt 86/36

(84) Benannte Vertragsstaaten:
AT BE CH DE FR GB IT LI LU NL SE

(71) Anmelder: **CERBERUS AG**
**Alte Landstrasse 411**
**CH-8708 Männedorf(CH)**

(72) Erfinder: **Alvarez, Angel**
**Müllerwis 27**
**CH-8606 Greifensee(CH)**

(72) Erfinder: **Luchsinger, Hugo**
**Saumstrasse 32**
**CH-8625 Gossau(CH)**

(74) Vertreter: **Tiemann, Ulrich, Dr.-Ing. et al,**
**c/o Cerberus AG Patentabteilung Alte Landstrasse 411**
**CH-8708 Männedorf(CH)**

(54) Überspannungsschutz-Anordnung.

(57) Bei einer Ueberspannungsschutz-Anordnung, speziell für Netzspannung und darüber, sind eine Anzahl von Gasentladungsstrecken für Kleinspannung, z.B. gasgefüllte Ueberspannungsableiter-Röhren ($2^1$, $2^2$ ... $2^x$) einerseits in Serie zueinander zwischen die Leitungen oder Anschlusspunkte (1, 2) geschaltet, andererseits gleichzeitig parallel zueinander über je einen nichtlinearen Widerstand, z.B. einen Kondensator ($3^1$ ...,$4^1$ ...) oder Varistor mit den beiden Leitungen oder Anschlusspunkten verbunden. Im Normalbetrieb wirkt die Anordnung als Parallelschaltung der Gasentladungsstrecken, so dass die einzelnen Ableiter bei Auftreten von Ueberspannungen gleichzeitig zünden und dabei eine Serieschaltung bilden. Bei Abklingen der Ueberspannung löschen die seriegeschalteten Ableiter selbsttätig ohne Hilfsmittel und Betriebsunterbruch, so dass die Schutzbereitschaft automatisch wiederhergestellt ist.

FIG.1

CERBERUS AG                          CH-8708 Männedorf, Schweiz

Ueberspannungsschutz-Anordnung

Die Erfindung betrifft eine Ueberspannungsschutz-Anordnung
mit mehreren zwischen zwei Anschlusspunkten mit bestimmter
Normalspannung angeordneten Komponenten, von denen wenigstens eine als Gasentladungsstrecke mit vorgegebener Zündspannung und vorgegebener Löschspannung und wenigstens eine
als Komponente mit nichtlinearem Widerstand ausgebildet ist,

Vorbekannte Ueberspannungsschutz-Anordnungen in der Form
von gasgefüllten Röhren haben sich als sehr geeignet zum
Schutz von Kleinspannungsanlagen mit Spannungen unterhalb
der Netzspannung (120 - 240 V) erwiesen.

Beim Schutz von mit Netzspannung (120 - 240 V) und darüber
betriebenen Anlagen vor Ueberspannungsstössen ergeben sich
jedoch Probleme bei der Verwendung solcher Gasentladungs-
Ueberspannungsableiter und von Luftfunkenstrecken, da
diese nach einem Ansprechen bei einem Ueberspannungsstoss
in der Regel nicht mehr selbständig zu löschen vermögen.
Die stromlose Zeit im Nulldurchgang der Wechselspannung
ist meist zu kurz, um den Nachfolgestrom oder den Kurzschlussstrom aus dem Netz zu unterbrechen. Die Folge davon
sind durchgebrannte Sicherungen und ein Betriebsunterbruch
sowie häufig defekte und für zukünftige Fälle unbrauchbar
gewordene Ueberspannungsableiter.

Um diesen Nachteil zu vermeiden, wurde bereits versucht,
nichtlineare Halbleiter mit hohem Widerstand bei geringer
oder normaler Spannung und niedrigerem Widerstand bei
Spannungsstössen mit höherer Spannung, insbesondere Zinkoxid-Varistoren zum Ueberspannungsschutz bei Netzspannung zu verwenden. Dabei wird der Umstand ausgenützt, dass
Varistoren keinen Nachfolgestrom verursachen und daher
kaum Löschprobleme bieten. Nachteilig ist jedoch, dass
im Ueberspannungsfall hohe Restspannungen, bis 3 kV auftreten und die zu schützenden Geräte schädigen können,
d.h. der Schutz ist vielfach ungenügend. Hinzu kommt,
dass Varistoren mit grossem Ableitvermögen recht gross
und entsprechend kostenaufwendig sind. Zudem haben Varistoren die Eigenschaft, nach Belastungen ihre Kennlinie
zu ändern, d.h. eine ungenügende Konstanz aufweisen und
Alterungserscheinungen zeigen.

Um die vorteilhaften Eigenschaften beider Ueberspannungsableiter-Typen zu kombinieren, ist es bereits bekannt
geworden, einen gasgefüllten Ableiter mit einem Zinkoxid-
Varistor parallelzuschalten. Ein solcher kombinierter
Ableiter zündet nur bei relativ grossen Stromstössen.
Er kann jedoch nur mit Sicherungen bis 1000 $A^2s$ Gesamtabschaltintegral, etwa entsprechend einer Sicherung des
Typs 10 A träge, verwendet werden. Ausserdem müssen die
erwähnten Nachteile des in der Kombination verwendeten
Varistors durch komplizierte Schutzschaltungen, wie z.B.
eine Ueberwachungseinrichtung für die Kennlinie und eine
Abschalteinrichtung für den Varistor beseitigt werden,
wie z.B. in DE 3 228 471 beschrieben.

Die Erfindung betrifft die Aufgabe, die vorstehend erwähnten Nachteile des Standes der Technik zu beseitigen
und insbesondere eine Ueberspannungsschutz-Anordnung zu
schaffen, die insbesondere auch bei Netzspannung sowohl
sicher anspricht und nach einmaligem Ansprechen sicher
wieder löscht, wobei die Anordnung nach dem Löschen sofort wieder betriebsbereit ist, ohne die Notwendigkeit
zusätzlicher störanfälliger Komponenten, wie Sicherungen,
Ueberwachungs- und Abschalteinrichtungen.

0192801

Erfindungsgemäss wird diese Aufgabe dadurch gelöst, dass mehrere Gasentladungsstrecken zwischen den beiden Anschlusspunkten der Anordnung in Serie geschaltet sind, wobei die Anzahl der Gasentladungsstrecken so gewählt ist, dass die summierte Löschspannung der einzelnen Gasentladungsstrecken über der Normalspannung zwischen den Anschlusspunkten liegt, und dass zwischen den beiden Anschlusspunkten und wenigstens einem Teil der Verbindungspunkte der einzelnen Gasentladungsstrecken Komponenten mit nichtlinearem Widerstand geschaltet sind, mittels der bei Normalspannung die einzelnen Gasentladungsstrecken parallel zwischen den Anschlusspunkten geschaltet sind.

Mit diesen erfindungsgemässen Merkmalen wird erreicht, dass im Normalbetrieb, d.h. bei normalen Netzspannung an jeder Gasentladungsstrecke die Netzspannung liegt. Bei einem Ueberspannungsstoss sprechen daher sämtliche Gasentladungsstrecken sicher an und zünden, so dass dern Widerstand zusammenbricht und den jetzt höheren Widerstand der nichtlinearen Komponenten unwirksam macht. Die Gasentladungsstrecken liegen nach der Zündung also quasi in Serienschaltung und jede Strecke erhält nur einen Teil der an den Anschlusspunkten anliegenden Spannung. Sofort nach dem Abklingen des Spannungsstosses löschen daher die Gasentladungsstrecken selbsttätig, ohne dass zusätzliche Hilfsmittel erforderlich wären, die einen Betriebsunterbruch verursachen könnten, und die Anordnung ist wieder betriebsbereit, ohne dass Komponenten ersetzt werden müssen.

Die Gasentladungsstrecken können dabei mit Vorteil als einzelne Gasentladungsableiter-Röhren ausgebildet sein, oder als gemeinsame gasgefüllte Röhre mit mehreren Entladungstrecken im gemeinsamen Innenraum, oder aber auch, je nach zu schützender Spannung, als Luft-Funkenstrecken. Die Komponenten mit nichtlinearem Widerstand können ebenfalls entsprechen den Anforderungen verschieden ausgebildet sein, solange der Widerstand bei schnellen Spannungserhöhungen erniedrigt ist, wie bei Kondensatoren oder Varistoren.

Die Erfindung wird an Hand der in den Figuren wiedergegebenen Schaltschemata von Ausführungsbeispielen näher
erläutert. Es zeigen:

Figur 1 eine Anordnung mit Kondensatoren als nichtlinearen Komponenten,

Figur 2 eine Anordnung mit Varistoren als nichtlinearen
Widerstandskomonenten,

Figur 3 eine Anordnung mit eine Gasentladungsröhre
mit mehreren Gasentladungsstrecken in Serie.

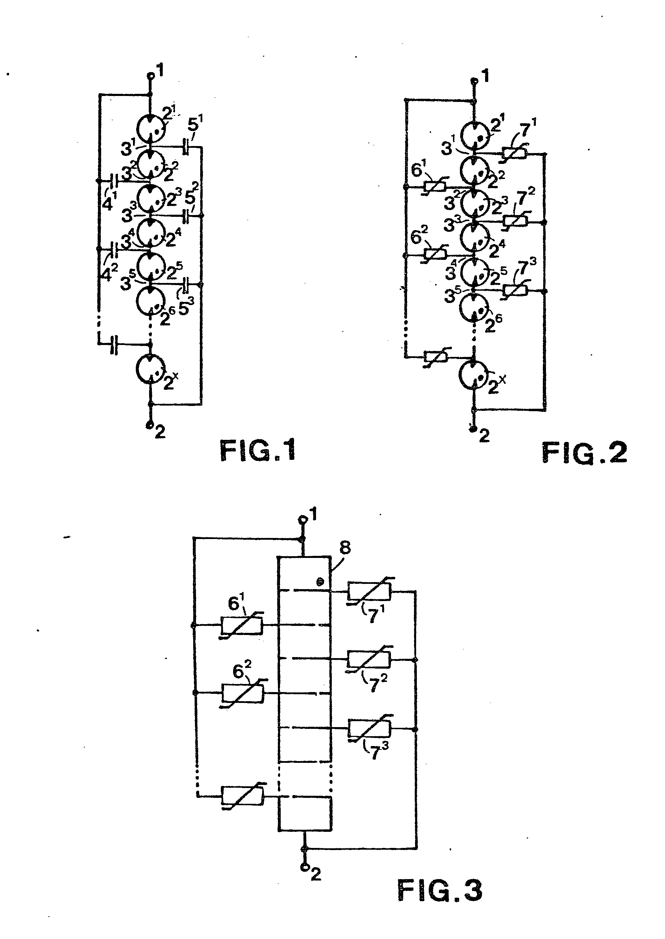

Bei der in Figur 1 wiedergegebenen Anordnung liegen zwischen
den Anschlusspunkten 1 und 2, an denen Netzspannung, z.B.
220 V Wechselspannung anliegt, eine Anzahl x von einzelnen
Gasentladungs-Ueberspannungsableitern $2^1$, $2^2$, $2^3$... $2^x$
in Serie. Dabei kann es sich z.B. um handelsübliche Kleinspannungsableiter, die für den Schutz von 12 V - Anlagen
bestimmt sind, handeln, oder um andere Ableiter-Typen,
wobei die Anzahl x der in Serie geschalteten Ableiter von
der Netzspannung und der Zündspannung der Ableiter abhängt.
An die Verbindungspunkte $3^1$, $3^2$, $3^3$... der einzelnen Gasentladungsableiter miteinander sind Kondensatoren angeschlossen, die abwechselnd an den einen Anschlusspunkt 1
und an den anderen Anschlusspunkt 2 angeschlossen sind.
So sind im dargestellten Beispiel die geraden Verbindungspunkte $3^2$, $3^4$... über Kondensatoren $4^1$, $4^2$... mit dem
Anschlusspunkt 1, und die ungeraden Verbindungspunkte $3^1$,
$3^3$... über Kondensatoren $5^1$, $5^2$... mit dem anderen Verbindungspunkt 2 verbunden.

Im Normalbetrieb liegen bei dieser Anordnung die einzelnen
Gasentladungsableiter $2^1$, $2^2$... $2^x$ wegen des relativ hohen
Innenwiderstandes im Vergleich zum Widerstand der Kondensatoren $4^1$, $4^2$... und $5^1$, $5^2$... praktisch parallel an

der Netzspannung. Bei einem Spannungsstoss werden dann zufolge des erniedrigten dynamischen Widerstandes der Kondensatoren sämtliche einzelnen Gasentladungsableiter praktisch gleichzeitig gezündet, wobei der Innenwiderstand der einzelnen Gasentladungsstrecken zusammenbricht undsomit der Widerstand der Kondensatoren vernachlässigbar wird, so dass die Gasentaladungsableiter nunmehr quasi in Serie zueinander liegen und wirken. Da die einzelnen Ableiter also nur 1/x der Gesamtspannungen an den Anschlusspunkten erhalten, so löschen die Ableiter sofort nach dem Abklingen des Spannungsstosses an den Anschlusspunkten selbsttätig, ohne dass weitere Hilfskomponenten benötigt werden, und ohne dass zufolge einer stehenbleibenden Gasentladung Sicherungen ansprechen oder gar Gasentladungs-Ueberspannungsableiter beschädigt oder unbrauchbar werden. Die Anordnung ist also nach einmaligem Ansprechen und dem nachfolgenden Löschen mit praktisch unveränderten Anspracheigenschaften sofort wieder betriebsbereit.

Figur 2 zeigt eine analoge Anordnung, bei der die Kondensatoren durch Varistoren, z.B. mit Zinkoxid als Basismaterial, ersetzt sind, wobei wiederum die an die geraden Verbindungspunkte $3^2$, $3^4$... angeschlossenen Varistoren $6^1$, $6^2$... an einen Anschlusspunkt 1, und die an die ungeraden Verbindungspunkte $3^1$, $3^3$... angeschlossenen Varistoren $7^1$, $7^2$... an den anderen Anschlusspunkt 2 angeschlossen sind. Die übrigen Komponenten sind gegenüber der ersten Figur unverändert.

Mit dieser Variante wird erreicht, dass die beim Zünden der einzelnen Gasentladungsableiter auftretenden Spannungsänderungen du/dt leichter aufgefangen werden können, die unter Umständen bei Kondensatoren kritisch sein können, bei Varistoren jedoch in der Regel keine Rolle spielen. Nachteilig könnte bei manchen Anwendungen jedoch sein, dass die Zündung bei Varsitoren unkontrollierter und zeitverzögert sein kann.

Bei der in Figur 3 wiedergegebenen besonders vorteilhaften
Weiterbildung wird dieser Nachteil dadurch vermieden, dass
die einzelnen Gasentladungsstrecken zu einer einzigen
Gasentladungsröhre 8 mit einer Vielzahl von Entladungsstrecken zusammengefasst sind. Dabei ist es zweckmässig,
den Innenraum der Gasentladungsröhre 8 durch mit Oeffnungen
versehene Wände in einzelne Kammern aufzuteilen, wobei
jede Kammer eine einzige Gasentladungsstrecke enthält,
und die Verbindungsöffnungen zwischen den einzelnen Kammern
möglichst klein sein und zudem gegeneinander versetzt sein
sollten um zu verhindern, dass eine Gasentladung durch die
Verbindungsöffnungen hindurch stattfindet. Trotzdem ist
bei einer solchen Anordnung die Zündung aller Gasentladungsstrecken sehr gleichmässig, und zwar auch bei Verwendung
von Varistoren als Zündhilfskomponenten. Der Grund liegt
offenbar darin, dass sich eine Ionisierung bei Zündung
einer Entladung in einer Kammer durch die Verbindungsöffnungen fortpflanzt und die Zündspannung in benachbarten
Kammern herabsetzt, so dass auch hier die Gasentladungsstrecken mit nur geringer Zeitverzögerung sofort zünden
und die durch Varistoren verursachte Zeitverzögerung
unwirksam gemacht wird.

Selbstverständlich können bei der Anordnung nach Figur 3
anstelle der Varistoren auch andere nichtlineare Widerstände verwendet werden, z.B. auch Kondensatoren, wodurch
die Zünd- und Lösch-Eigenschaften noch weiter verbessert
und an die Anforderungen der Praxis angepasst werden können.
Dabei können bei Verwendung von Kondensatoren als Zündhilfskomponenten die Verbindungsöffnungen kleiner ausgeführt
werden oder auch ganz entfallen.

Abwandlungen der beschriebenen Anordnungen zur Anpassung
an praktische Anforderungen, wie zu schützende Geräte, Versorgungsspannung und erwartete Ueberspannungen, durch
entsprechende Wahl der Art und Anzahl der Komponenten und
dern Ausbildung liegen im Rahmen des Erfindungsgedankens.

**Patentansprüche**

1. Ueberspannungsschutz-Anordnung mit mehreren zwischen zwei Anschlusspunkten mit bestimmter Normalspannung angeordneten Komponenten, von denen wenigstens eine als Gasentladungsstrecke mit vorgegebener Zündspannung und vorgegebener Löschspannung und wenigstens eine als Komponente mit nichtlinearem Widerstand ausgebildet ist, dadurch gekennzeichnet, dass mehrere Gasentladungsstrecken ($2^1$, $2^2$, $2^3$,... $2^x$) zwischen den beiden Anschlusspunkten (1, 2) der Anordnung in Serie geschaltet sind, wobei die Anzahl (x) der Gasentladungsstrecken so gewählt ist, dass die summierte Löschspannung der einzelnen Gasentladungsstrecken über der Normalspannung zwischen den Anschlusspunkten liegt, und dass zwischen den beiden Anschlusspunkten (1, 2) und wenigstens einem Teil der Verbindungspunkte ($3^1$, $3^2$,...) der einzelnen Gasentladungsstrecken ($2^1$, $2^2$, $2^3$... $2^x$) Komponenten ($4^1,4^2..5^1,5^2..6^1,6^2..7^1,7^2.$) mit nichtlinearem Widerstand geschaltet sind, mittels der bei Normalspannung die einzelnen Gasentladungsstrecken parallel zwischen den Anschlusspunkten (1, 2) geschaltet sind.

2. Anordnung nach Anspruch 1, dadurch gekennzeichnet, dass die Gasentladungsstrecken ($2^1$, $2^2$, $2^3$... $2^x$) als gasgefüllte Röhren ausgebildet sind.

3. Anordnung nach Anspruch 1, dadurch gekennzeichnet, dass die Gasentladungsstrecken ($2^1$, $2^2$, $2^3$,... $2^x$) in einzelnen, durch Verbindungsöffnungen miteinander verbundene Kammern einer gemeinsamen Röhre (8) angeordnet sind.

4. Anordnung nach Anspruch 3, dadurch gekennzeichnet, dass die Verbindungsöffnungen zwischen den Kammern der gemeinsamen Röhre (8) eine solche Grösse und Anordnung aufweisen, dass keine Gasentladung durch die Oeffnungen hindurch stattfinden kann.

5.   Anordnung nach Anspruch 1, dadurch gekennzeichnet,
dass die Gasentladungsstrecken als Luft-Funkenstrecken
ausgebildet sind.

6.   Anordnung nach einem der Ansprüche 1 - 5, dadurch
gekennzeichnet, dass die Komponenten ($4^1$, $4^2$,... $5^1$, $5^2$...)
mit nichtlinearem Widerstand als Kondensatoren ausgebildet sind.

7.   Anordnung nach einem der Ansprüche 1 - 5, dadurch
gekennzeichnet, dass die Komponenten ($6^1$, $6^2$... $7^1$, $7^2$...)
mit nichtlinearem Widerstand einen mit steigender Spannung
abnehmenden Widerstand wenigstens in einem Teilbereich
der Spannung aufweist.

8.   Anordnung nach Anspruch 7, dadurch gekennzeichnet,
dass die Komponenten ($6^1$, $6^2$..., $7^1$, $7^2$...) mit nichtlinearem Widerstand als Halbleiter-Varistoren ausgebildet
sind.

9.   Anordnung nach Anspruch 8, dadurch gekennzeichnet,
dass die Halbleiter-Varistoren Zinkoxid enthalten.

10. Anordnung nach einem der Ansprüche 1 - 9, dadurch
gekennzeichnet, dass die Verbindungspunkte ($3^1$, $3^2$...)
der einzelnen, in Serie geschalteten Gasentladungsstrecken
($2^1$, $2^2$, ... $2^x$) abwechselnd über eine Komponente mit
nichtlinearem Widerstand mit dem einen Anschlusspunkt (1)
und mit dem anderen Anschlusspunkt (2) verbunden sind,
so dass die Gasentladungsstrecken einerseits zueinander
in Serie zwischen den Anschlusspunkten liegen, andererseits gleichzeitig parallel zueinander und jeweils in
Serie mit je einer Komponente mit nichtlinearem Widerstand
zwischen den beiden Anschlusspunkten liegen.

**Patentansprüche**

1. Ueberspannungsschutz-Anordnung mit mehreren zwischen zwei Anschlusspunkten (1, 2) mit bestimmter Normalspannung hintereinandergeschalteten Gasentladungsstrecken ($2^1 ... 2^x$) mit vorgegebener Zündspannung und vorgegebener Löschspannung, wobei an die Verbindungspunkte ($3^1$, $3^2$,...) der einzelnen Gasentladungsstrecken ($2^1$, $2^2$,...$2^x$) Komponenten ($4^1$, $4^2$,... $5^1$, $5^2$,...$6^1$, $6^2$,...$7^1$, $7^2$,...) mit nichtlinearem Widerstand angeschlossen sind, deren Widerstand wesentlich kleiner ist als der Widerstand der Gasentladungsstrecken im gelöschten Zustand, jedoch wesentlich grösser als der Widerstand der Gasentladungsstrecken im gezündeten Zustand, **dadurch gekennzeichnet**, dass die Komponenten ($4^1$, $4^2$, ... $5^1$, $5^2$,...$6^1$, $6^2$,...$7^1$, $7^2$...) mit nichtlinearem Widerstand so geschaltet sind, dass bei Normalspannung die gelöschten Gasentladungsstrecken ($2^1$, $2^2$,...$2^x$) parallel zueinander zwischen den Anschlusspunkten (1, 2) , jedoch bei einer Ueberspannung die gezündeten Gasentladungsstrecken ($2^1 ... 2^x$) in Serie zwischen den Anschlusspunkten (1, 2) geschaltet sind, wobei die Anzahl (x) der Gasentladungsstrecken so gewählt ist, dass die summierte Löschspannung der einzelnen Gasentladungsstrecken über der Normalspannung liegt.

2. Anordnung nach Anspruch 1, **dadurch gekennzeichnet**, dass die Gasentladungsstrecken ($2^1$, $2^2$, $2^3$... $2^x$) als gasgefüllte Röhren ausgebildet sind.

3. Anordnung nach Anspruch 1, **dadurch gekennzeichnet**, dass die Gasentladungsstrecken ($2^1$, $2^2$, $2^3$,... $2^x$) in einzelnen, durch Verbindungsöffnungen miteinander verbundene Kammern einer gemeinsamen Röhre (8) angeordnet sind.

4. Anordnung nach Anspruch 3, **dadurch gekennzeichnet**, dass die Verbindungsöffnungen zwischen den Kammern der gemeinsamen Röhre (8) eine solche Grösse und Anordnung aufweisen, dass keine Gasentladung durch die Oeffnungen hindurch stattfinden kann.

0192801

5. Anordnung nach Anspruch 1, _dadurch gekennzeichnet_, dass die Gasentladungsstrecken als Luft-Funkenstrecken ausgebildet sind.

6. Anordnung nach einem der Ansprüche 1 - 5, _dadurch gekennzeichnet_, dass die Komponenten $(4^1, 4^2, \ldots 5^1, 5^2 \ldots)$ mit nichtlinearem Widerstand als Kondensatoren ausgebildet sind.

7. Anordnung nach einem der Ansprüche 1 - 5, _dadurch gekennzeichnet_, dass die Komponenten $(6^1, 6^2 \ldots 7^1, 7^2 \ldots)$ mit nichtlinearem Widerstand einen mit steigender Spannung abnehmenden Widerstand wenigstens in einem Teilbereich der Spannung aufweist.

8. Anordnung nach Anspruch 7, _dadurch gekennzeichnet_, dass die Komponenten $(6^1, 6^2 \ldots, 7^1, 7^2 \ldots)$ mit nichtlinearem Widerstand als Halbleiter-Varistoren ausgebildet sind.

9. Anordnung nach Anspruch 8, _dadurch gekennzeichnet_, dass die Halbleiter-Varistoren Zinkoxid enthalten.

10. Anordnung nach einem der Ansprüche 1 - 9, _dadurch gekennzeichnet_, dass die Verbindungspunkte $(3^1, 3^2, \ldots)$ der hintereinander-geschalteten Gasentladungsstrecken $(2^1, 2^2, \ldots 2^x)$ abwechselnd über zugehörige getrennte Komponenten $(4^1, 4^2 \ldots 5^1, 5^2 \ldots 6^1, 6^2 \ldots 7^1, 7^2)$ mit nichtlinearem Widerstand jeweils mit dem einen Anschlusspunkt (1) und mit dem anderen Anschlusspunkt (2) verbunden sind.

**FIG.1**

**FIG.2**

**FIG.3**

C 292

# EUROPÄISCHER RECHERCHENBERICHT

**0192801**

Nummer der Anmeldung

EP 85 10 3453

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | DE-C-1 538 306 (AKTIENGESELLSCHAFT BROWN, BOVERI & CIE.) * Seite 1, Spalte 1, Zeilen 1-68, Figur 1 * | 1,5 | H 02 H 9/06 |
| X | CH-A- 502 009 (LICENTIA) * Seite 1, Spalte 1, Zeilen 1-28; Figur 1 * | 1 | |
| Y | | 3,4 | |
| X | GB-A-1 224 956 (WESTINGHOUSE ELECTRIC CORP.) * Seite 2, Zeilen 18-50; Figur 1 * | 1,2,5-10 | |
| Y | DE-A-2 032 900 (JOSLYN MFG AND SUPPLY CO.) * Figur 4 * | 3,4 | RECHERCHIERTE SACHGEBIETE (Int. Cl.4) <br><br> H 01 T 4/16 <br> H 02 H 9/04 <br> H 02 H 9/06 |
| D,A | DE-A-3 228 471 (DEHN & SÖHNE GMBH) * Zusammenfassung * | | |

Der vorliegende Recherchenbericht wurde für alle Patentansprüche erstellt.

| Recherchenort | Abschlußdatum der Recherche | Prüfer |
|---|---|---|
| BERLIN | 23-09-1985 | FAORO G |

EPA Form 1503 03 82